(19) Europäisches Patentamt
European Patent Office
Office européen des brevets

(11) **EP 3 647 277 A1**

(12) **EUROPEAN PATENT APPLICATION**

(43) Date of publication:
06.05.2020 Bulletin 2020/19

(51) Int Cl.:
*C02F 1/52* (2006.01)          *C02F 1/56* (2006.01)
*C02F 11/148* (2019.01)

(21) Application number: 18203865.3

(22) Date of filing: 31.10.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Clariant International Ltd**
**4132 Muttenz (CH)**

(72) Inventors:
• **ZIEGLER, Christian**
**81249 München (DE)**

• **HÖLZL, Gabriele**
**85405 Nandlstadt (DE)**
• **HÄUßLER, Matthias**
**65239 Hochheim am Main (DE)**
• **The other inventors have waived their right to be thus mentioned.**

(74) Representative: **Graser, Konstanze**
**Clariant Produkte (Deutschland) GmbH**
**IPM / Patent & License Management**
**Arabellastrasse 4a**
**81925 München (DE)**

(54) **PROCESS FOR DEWATERING AQUEOUS SLUDGE WATER**

(57)    The present invention relates to a process for dewatering of aqueous sludge water by adding at least one cationic component selected from cationic polymers, oligomers and mixtures thereof, and contacting with at least one anionic component selected from natural anionic minerals and mixtures thereof.

**Fig. 1**

**Description**

The present invention relates to a process for dewatering of aqueous sludge water.

Global rate of sedimentation and total volume of sediments has increased dramatically within the recent years. Dealing with these sediments responsibly has become an important issue to minimize the impact on the environment. Sediments collect not only in staggering volumes in our rivers, waterways and harbors but are also generated as a consequence of industrial activity in numerous economic sectors. At present, hundreds of millions of tons of these sediments require effective dewatering in order to be disposed or re-used. Furthermore, competition for water for industrial, agricultural and human consumption increases, making water re-use an increasingly relevant topic.

A very efficient way to dewater sediments is by use of flocculation technology. This technology involves the use of chemical aids, including polymers, which aggregate smaller silt particles to form larger composites ("flocs") to facilitate separation from the water. Many methods already known within the state of the art use cationically coated CaCO3 material in combination with a later addition of an anionic polymer. Examples for such processes are described within EP 2 589 430 or WO 2014/180631. The use of these known processes is however limited to anionic sludge water. To address this drawback, within WO 2016 146404 CaCO3 was subjected to a surface reaction by applying e.g. phosphoric acid which leads to a surface modification of the CaCO3 material. The so pre-treated material was then coated with an anionic polymer. This material is thought to be particularly suitable for sludge water containing a high amount of salts or heavy metals.

However, in case very fine sediments are concerned, effective dewatering is still a technical and economic challenge. In these cases the remaining turbidity of the filtrate, sedimentation speed and remaining water content still needs to be improved.

The inventors of the present invention have set themselves the task to develop a new purification process which is particularly suitable for the purification of sludge water comprising very fine sediments.

This task has been solved by

a process for dewatering of aqueous sludge water, comprising the steps:

a) Providing a sludge water;

b) Adding at least one cationic component selected from cationic synthetic or natural polymers, oligomers and mixtures thereof;

c) Contacting the sludge water with at least one anionic component selected from natural anionic minerals and mixtures thereof;

d) Formation of a composite material consisting of the sludge, the cationic component and the anionic component;

e) Separating the water from the composite material.

The process according to the invention does not only lead to purified water of very low turbidity but enables dewatering of a high amount of sludge water while keeping process time short.

In addition, the inventive process gives excellent results for sludge water of a very broad pH range and sludge water with either a substantial content of anionic or cationic components can be effectively treated. Further, no specific pre-treatment of the surface of any component is necessary which decreases costs of the overall process. The inventive process gives not only excellent results in combination with the use of cationic polyacrylamide polymer but also with novel alternatives. Another advantage of the inventive process is that composite material of a high density is formed which decreases filtration time, facilitates separation of purified water and composite material and therefore decreases overall process time contributing to further cost reduction.

The "dewatering" according to the present invention is carried out by contacting at least one cationic component with the sludge water, a subsequent flocculation, the addition of at least one anionic component, a subsequent formation of a composite material and final filtration to separate the composite material and the remaining purified water. Dewatering is preferably carried out by use of a dewatering unit such as membrane filter presses, vacuum filter presses or geobags, which is characterized by retaining the flocculated solids but releasing the liquid contained in the sludge water. However, within the scope of the present invention any kind of dewatering known to a person skilled in the art as suitable for the inventive purpose can be applied (further exemplary dewatering units are filter or belt presses, gravity dewatering tables, mine tailings storage facilities or sedimentation basins).

Within the present invention the term "sludge water" is to be understood as referring to any liquid composition comprising at least 60 wt.-% $H_2O$ and at least 1 wt.-% of solids of any kind. Within the present invention, the term "solids" preferably refers to silt particles of a granular material of a size between 0.002 mm and 0.063 mm (ISO 14688). Further, "solids" also refers to clay particles of a grain size of less than 0.002 mm. The process according to the present invention is in particular suitable for sludge water comprising from 1 to 20 wt.-% of solids selected from silt particles of a granular material of a size between 0.002 mm and 0.05 mm, clay particles of a grain size of from 0.001 to 0.002 mm and mixtures thereof. Excellent results regarding turbidity decrease (indicating effectiveness of removal of solids from the sludge water) and sludge volume (indicating settling behavior and compaction of the flocculated sludge) can be achieved for sludge water containing at least 60 wt.-% solids of a grain size of less than 25 $\mu$m or for sludge water containing from 15 to 100 wt.-% (i.e. weight of grains with a size of less than 25 $\mu$m per weight sludge water) or even containing from 16 to 95 wt.-% solids of a grain size of less than 25 $\mu$m.

"Sludge water" may further comprise rare earth minerals and metals, salts but also toxic substances such as heavy metals (for examples mercury, cadmium, lead, chromium, nickel, copper, tin and/or zinc), organometallic compounds (such as tetrabutyltin) and toxic organic compounds (polycyclic aromatic substances and/or halogenated organic compounds). Sludge water may originate from marine waters or freshwaters but also from mining, dredging, civil engineering or oil and gas drilling and exploration site.

"Sludge water" according to the present invention may also comprise any kind of waste water known to a person skilled in the art. The term "waste water" as used within the present application particularly refers to any liquid comprising at least 60 wt.-% of $H_2O$, which has been adversely affected in quality by anthropogenic influence. Waste water may also contain a certain amount of solids but is further characterized by its origin from a combination of domestic, industrial, commercial or agricultural activities, surface runoff or stormwater, and from sewer inflow or infiltration.

Within the present invention, the sludge water may be provided in any form known to the person skilled in the art as suitable for the inventive process. For example, the sludge water may be provided in a tank or vessel or within a suitable apparatus such as disclosed by WO 2017 129419.

Within the present invention, the term "adding" is to be understood to refer to any measure or method known to a person skilled in the art as suitable for the inventive process. For example, "adding" may be carried out by the addition of the full amount of the cationic component to the sludge water or by a successive addition of the cationic component such as e.g. by continuously pumping the cationic component into the vessel or apparatus containing the sludge water.

The at least one cationic component is selected from cationic synthetic or natural polymers, oligomers and mixtures thereof. Within a particularly suitable process the at least one cationic component is selected from poly(diallyldimethylammonium chloride) (PolyDADMAC), polyethylenimine (PEI), polyamine, polyvinylamine (PVA), poly(amidoamine) (PAMAM), cationic polyacrylamide (CPAM), cationic starch and/or cationic proteins. It is also within the scope of the present invention to select two or more cationic components.

Within a particularly suitable example of the inventive process the weight average molecular weight (Mw) of the cationic polymer is selected from 20.000 g/mol to 20.000.000 g/mol, wherein from 22.000 to 15.000.000 g/mol or from 50.000 to 500.000 g/mol are particularly suitable.

Within step (c) the sludge water is contacted with at least one anionic component selected from natural anionic minerals and mixtures thereof. The term "contacting" according to the present invention is to be understood as referring to any method or measure known to a person skilled in the art as suitable for the inventive process. For example, "contacting" may be carried out by the addition of the full amount of the at least one anionic component to the sludge water and at least one cationic component - or respective flocs of particles - by a successive addition of the at least one anionic component such as e.g. by continuously pumping the at least one anionic component into the vessel or apparatus containing the sludge water and the at least one cationic component and/or respective flocs.

Within a particularly effective embodiment of the present invention, the natural anionic mineral is selected from the group of tectosilicates as such as zeolite, clinoptilolite, mordenite, chabazite, phillipsite, scolecite, stilbite, analcime, laumontite, erionite, ferrierite, quartz, diatomaceous earth, perlite, feldspars; and/or phyllosilicates such as kaolin, kaolinite, nacrite, serpentine, chysotile, antigorite, lizardite, halloysite, dickite, chrysotile, pyrophyllite, talc, kerolite, smectite, montmorillonite, beidellite, nontronite, hectorite, saponite, sauconite, vermiculite, muscovite, phlogopite, illite, sepiolite, palygorskite, attapulgite; bentonite and/or other minerals such as hydromagnesite, magnesium carbonate, gypsum, huntite, alumina, boehmite, gibbsite; and mixtures thereof.

Within a particularly advantageous embodiment of the present invention, the natural anionic mineral comprises an anionic polymer. Within the present invention "comprising" is thereby referring to embodiments wherein the anionic polymer is coated or adsorbed onto the natural anionic mineral. Suitable coating methods are known to a person skilled in the art and may be carried out by adding the anionic polymer to a suspension containing the natural anionic mineral and stirring for 30 minutes. Embodiments wherein the natural anionic mineral comprises an anionic polymer are particularly suitable for sludge water of a particular low pH value such as a pH value as from 2 to 6 or from 2 to 5 and/or sludge water comprising a high amount of cationic salts as the formation of composite material can be further precipitated.

The anionic polymer may thereby be selected from anionic polyacrylamide (APAM), polyacrylate, polyvinyl alcohol; phosphates such as trisodium phosphate, sodium pyrophosphate, trisodium polyphosphate; polyphosphonate; salts of organic acids such as citrate, tartrate, succinate, adipate; carboxymethyl cellulose (CMC) and salts thereof;

anionic carboxymethylstarch; lignosulfate; alkyl and/or aryl sulfonate; lauryl sulfate, Alginate, chitosan, guar gum; and mixtures thereof. Particularly suitable polymers which are environmentally friendly are disclosed in EP17198872.

It is a particular advantage of the inventive process that it effectively dewaters sludge water of a broad pH range, for example sludge water with a pH range of from 2.0 to 13.5, or from 3.0 to 12.5 wherein sludge waters with a high solid content of from 5 to 15 wt.-% solids and a pH of from 7.0 to 13.5 or from 7.0 to 12.5 can be particularly advantageously dewatered.

Within a particularly advantageous process of the present invention, the weight ratio of natural anionic mineral to anionic polymer is at least 1: 0.02, wherein a ratio of natural anionic mineral to anionic polymer selected from the range of from 1 to (0.02 to 0.05) is particularly suitable for sludge water with a pH of from pH 7 to 13.5. Within another particularly advantageous process of the present invention, from 2 to 20 wt.-% of the anionic polymer relative to the weight of the natural anionic mineral are applied.

An alternative way to enhance the efficiency of the inventive process in particularly in view of sludge waters of a high pH value and/or with a high content of cationic salts or other cationic compounds is to subject the natural anionic mineral to an anionic exchange process. Such an anionic exchange process can be for example carried out by contacting the natural anionic mineral with hydrochloric acid (anionic exchange process) wherein the "contacting" can be carried out by any means or measure known to a person skilled in the art as suitable for the inventive purpose. It is also within the scope of the present invention that the at least one anionic polymer is coated or adsorbed onto a natural anionic mineral which has been subjected to anionic exchange process.

Within step d) of the inventive process, a composite material consisting of the sludge, the cationic component and the anionic component is formed. The formation thereby occurs automatically as long as steps a) to c) of the inventive process have been carried out according to the present invention. It is thereby possible that a minor amount of the natural anionic mineral, the cationic component and/or the anionic polymer remains in the purified water. It is, however, of a particular advantage of the inventive process that the amount of the natural anionic mineral, the cationic component and/or the anionic polymer in the purified water is less than 40 ppm, within a particular advantageous embodiment of the inventive process the amount is from 5 to 20 ppm.

Within another advantageous process of the present invention the anionic component has a negative charge of from -3000 to -100 mV and a charge density of from 100 to 1000 $\mu$eq/g, wherein a negative charge of from -2500 to -350 mV and a charge density of from 150 to 950 $\mu$eq/g or from 200 to 900 $\mu$eq/g lead to particularly advantageous results regarding turbidity decrease in particular in case the sludge water has a pH from 7.0 to 13.5.

Within another suitable embodiment of the inventive process the cationic component is added in an amount from 0.001kg to 0.5 kg per ton sludge water, wherein an amount of from 0.01 kg to 0.45 kg per ton sludge water or from 0.02 to 0.40 kg per ton sludge water will also lead to advantageous dewatering results.

Within another suitable embodiment of the inventive process the sludge water is contacted with from 1 to 5 kg anionic component per ton sludge water wherein an amount of from 1 kg to 4.5 kg per ton sludge water or from 1.5 to 4.0 kg per ton sludge water will also lead to advantageous dewatering results.

Within the present invention, the "separation" can be carried out by any method and/or any means known to a person skilled in the art as suitable for the inventive purpose. Within a particularly suitable embodiment the separation is carried out by transferring the sludge water containing the formed composite material into geobags which retain the composite material but release the purified water. Within another advantageous embodiment the separation is carried out by transferring the conditioned/treated sludge water containing the composite material into membrane filter presses, where the composite material is pressed between membranes attached to filter plates which press out clear water but retain the composite material until the produced filter-cake is dry enough to be recovered. Within a further advantageous embodiment the separation is carried out by transferring the sludge water containing the composite material into belt filter presses, where the composite material is pressed between two moving porous fabrics in order to press out clear water but where the composite material remains on the belts until the produced filter-cake is dry enough to be recovered. Within another suitable embodiment the separation is carried out by transferring the sludge water comprising the composite material into gravity tables, where the composite material is deposited onto a moving porous fabric to allow clear water to drain from the fabric but which retains the composite material until the produced filter-cake is dry enough to be recovered. Within another particularly suitable embodiment the separation is carried out by transferring the sludge water comprising the composite material into a tailings pond or lagoon, where the composite material is rapidly precipitated and consolidate at the bottom of the lagoon, leaving a clear supernatant and the formation of a compact composite base material.

**General embodiments**

In the following, the inventive process is further illustrated by general embodiments. These embodiments are not to be understood to limit the scope of the invention but to depict process constellations which will lead to particularly advantageous results when the process is applied to sludge water with a high content of very fine sediments.

**General embodiment 1**

Process for dewatering of aqueous sludge water, comprising the steps:

a) Providing a sludge water;

b) Adding at least one cationic component selected from cationic synthetic or natural polymers, oligomers and mixtures thereof;

c) Contacting the sludge water with at least one anionic component selected from natural anionic minerals and mixtures thereof;

d) Formation of a composite material consisting of the sludge, the cationic component and the anionic component;

e) Separating the water from the composite material;

wherein the sludge water contains at least 60 wt.-% solids of a grain size of less than 25 μm or wherein the sludge water contains from 15 to 100 wt.-% solids of a grain size of less than 25 μm.

**General embodiment 2**

Process for dewatering of aqueous sludge water, comprising the steps:

a) Providing a sludge water;

b) Adding at least one cationic component selected from cationic synthetic or natural polymers, oligomers and mixtures thereof;

c) Contacting the sludge water with at least one anionic component selected from natural anionic minerals and mixtures thereof;

d) Formation of a composite material consisting of the sludge, the cationic component and the anionic component;

e) Separating the water from the composite material;

wherein the at least one natural anionic mineral is selected from tectosilicates, phyllosilicates, hydromagnesite, magnesium carbonate, gypsum, huntite, alumina, boehmite, gibbsite; and mixtures thereof.

**General embodiment 3**

Process for dewatering of aqueous sludge water according any of general embodiments 1 or 2, wherein the at least one natural anionic mineral is coated with at least one anionic polymer selected from anionic polyacrylamide (APAM), polyacrylate, polyvinyl alcohol; phosphates such as trisodium phosphate, sodium pyrophosphate, trisodium polyphosphate; polyphosphonate; salts of organic acids such as citrate, tartrate, succinate, adipate; carboxymethyl cellulose (CMC) and salts thereof; anionic carboxymethylstarch; lignosulfate; alkyl and/or aryl sulfonate; lauryl sulfate, alginate, chitosan, guar gum; and mixtures thereof.

**General embodiment 4**

Process for dewatering of aqueous sludge water according to general embodiment 1-3, wherein the sludge water has a pH of from 3 to 12.5.

**General embodiment 5**

Process for dewatering of aqueous sludge water according to any of general embodiments 1 to 4, wherein the anionic component has a negative charge of from - 3000 to -100 mV and a charge density of from 100 to 1000 μeq/g.

**General embodiment 6**

Process for dewatering of aqueous sludge water according to any of general embodiments 1 to 5, wherein the weight average molecular weight (Mw) of the cationic polymer is selected from 20.000 g/mol to 20.000.000 g/mol.

**General embodiment 7**

Process for dewatering of aqueous sludge water, comprising the steps:

a) Providing a sludge water;

b) Adding at least one cationic component selected from cationic synthetic or natural polymers and mixtures thereof selected from the group consisting of poly(diallyldimethylammonium chloride) (polyDADMAC), polyethylenimine (PEI), polyamine, polyvinylamine (PVA), poly(amidoamine) (PAMAM), cationic polyacrylamide (CPAM), poly(meth)acrylamidopropyl trimethylammonium chloride, cationic poly(meth)acrylates and copolymers thereof, cationic poly(meth)acrylamides, cationic modified guar gum, cationic modified cellulose, cationic starch and/or cationic proteins salts and copolymers thereof, and chitosan;

c) Contacting the sludge water with at least one anionic component selected from tectosilicates, phyllosilicates, hydromagnesite, magnesium carbonate, gypsum, huntite, alumina, boehmite, gibbsite; and mixtures thereof and wherein the at least one anionic component is coated with at least one anionic polymer selected from anionic polyacrylamide (APAM), polyacrylate, polyvinyl alcohol; phosphates such as trisodium phosphate, sodium pyrophosphate, trisodium polyphosphate; polyphosphonate; salts of organic acids such as citrate, tartrate, succinate, adipate; carboxymethyl cellulose (CMC) and salts thereof; anionic carboxymethylstarch; lignosulfate; alkyl and/or aryl sulfonate; lauryl sulfate, alginate, chitosan, guar gum; and mixtures thereof;

d) Formation of a composite material consisting of the sludge, the cationic component and the anionic component;

e) Separating the water from the composite material;

wherein the sludge water contains at least 60 wt.-% solids of a grain size of less than 25 $\mu$m or wherein the sludge water contains from 15 to 100 wt.-% solids of a grain size of less than 25 $\mu$m and wherein the anionic component has a negative charge of from -3000 to -100 mV and a charge density of from 100 to 1000 $\mu$eq/g.

**Examples and Figures**

The present invention is now described by the following examples and figures. The examples and figures are for illustrative purposes only and are not to be understood as limiting the invention.

**List of figures:**

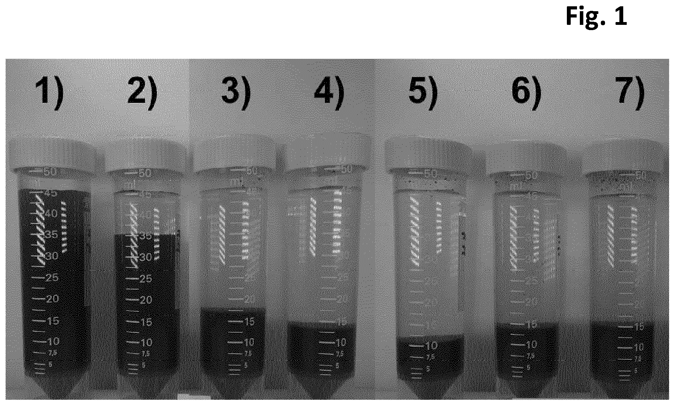

Figure 1: Sludge volume after 5 Min. dewatering of sludge water A with inventive process in comparison to 1) an untreated sludge water (zero) and 2) state of the art process (Reference). For the inventive process polyDADMAC was used as cationic component. As anionic component, natural minerals 3) Bentonite, 4) Sap. + Ker, 5) D. E., 6) HM, 7) Zeolite were tested in combination with 6 wt.% of anionic polymer (PAM 3).

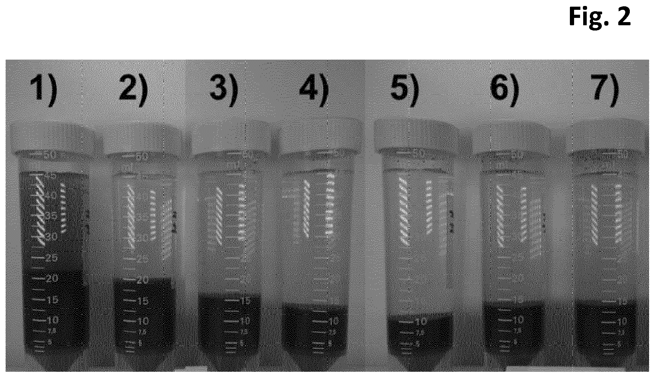

Figure 2: Sludge volume after 30 Min. dewatering of sludge water A with inventive process in comparison to 1) an untreated sludge water (zero) and 2) state of the art process (Reference). For the inventive process polyDADMAC was used as cationic component. As anionic component, natural minerals 3) Bentonite, 4) Sap. + Ker, 5) D. E., 6) HM, 7) Zeolite were tested in combination with 6 wt.% of anionic polymer (PAM 3).

**Experimental setup and characterization**

All characterization methods and experimental procedures used for the presented examples are described beforehand in this section. A detailed description of the used sludge waters and a list of the polymers and natural minerals can be found at the end of this section.

• Preparation of anionic component

In the first step, 1 wt.-% natural mineral suspension was prepared by dispersing 1.0 g oven dry natural mineral in 100 g distilled water under stirring with a Variomag® multipoint HP magnetic stirrer for 30 min. In the second step, the calculated amount of anionic polymer x (in the examples x = 2 wt.-%, 6 wt.-%, 10 wt.-%) was adsorbed onto the natural mineral surface under stirring and is referred to as anionic component in the following. The anionic component was stirred until its use, typically for another 30 minutes.

• Flocculation and dewatering

For flocculation and dewatering experiments 200 g homogenized sludge water was stirred in a beaker on a JarTester® JLT 4 with a speed of 200 rpm. In a first step a calculated amount of cationic polymer (PolyDADMAC) as cationic component was dosed to the sludge water and everything stirred for 2 minutes before in a second step the calculated amount of anionic component was dosed and the formed composite material stirred for another 2 minutes. The dosage was optimized to achieve best flocculation and dewatering performance beforehand. A typical dosage was between 5 and 40 g/t dry solid for the cationic component and between 0.5 and 4.0 kg/t dry solid for the anionic component. An overview of different dosages for used sludge waters is given in Table 1.

**Table 1:** Optimum dosage rate for used sludge waters

| Sludge water | A | B | C | D |
|---|---|---|---|---|
| Dosage cationic component [kg/t dry solid] | 0.020 | 0.040 | 0.005 | 0.010 |
| Dosage anionic component [kg/t dry solid] | 2.0 | 4.0 | 0.5 | 1.0 |

Sludge volume

45 mL of the composite material were then filled into 50 mL plastic tubes, sealed and placed steady. The settled sludge volume was taken after 5 minutes, 10 minutes, 20 minutes and 30 minutes in mL. The sludge volume is a parameter for the settling behavior and compaction of the (flocculated) sludge water.

Turbidity

Turbidity was then determined on the supernatant of the settled composite material on a Hach Lange, 2100Q is (light-emitting diode at 860 nm) instrument. With a pipette 10 to 15 mL of the supernatant were filled into the sample cell and measured in the calibrated turbidimeter. The turbidity is a parameter for the effectiveness of suspended solid matter removal.

• Reference: polyDADMAC modified $CaCO_3$ / anionic polyacrylate

For the reference flocculation and dewatering experiments 200 g homogenized sludge water was stirred in a beaker on a JarTester® JLT 4 with a speed of 200 rpm. A calculated amount of polyDADMAC modified $CaCO_3$ (containing 1 wt.-% polyDADMAC) was added to the sludge water and everything stirred for 2 minutes before the calculated amount of anionic polyacrylate was dosed and the formed composite material stirred for another 2 minutes. A typical dosage was between 0.5 and 4.0 kg/t dry solid for the polyDADMAC modified $CaCO_3$ and 50 and 400 g/t dry solid for the anionic polyacrylate.

Performance indicators were measured as described for dewatering and flocculation.

• Solid content

Solid content was determined via a Sartorius Moisture Analyzer MA 100. Ca. 2.0 g of homogenized sludge water or formed composite material were put on an aluminum cup and measured in the moisture analyser at 130°C. Moisture content is shown in %.

Calculation of the solid content wt.-% = 100 wt.-% - moisture content wt.-%

• pH value

pH was measured with a WTW inoLab pH 7110 equipped with a pH-Electrode SenTix® 81. The calibrated pH-Electrode was put into the homogenized sludge water and the pH value determined after stabilization.

• Conductivity

Conductivity was measured with a WTW LF 197 equipped with a measuring cell TetraCon® 325. The conductivity measuring cell was immersed into the homogenized sludge water and the conductivity determined in mS/cm or S/cm after stabilization.

• Charge and charge density

Charge and charge density was analysed with help of a BTG Mütek, PCD 04. The procedure was slightly different in dependence of the respective analyte. Sludge waters or natural minerals had to be diluted to 1 wt.-% solid content, cationic or anionic components were used as 0.1% suspension, and anionic or cationic polymers were prepared at a concentration of 0.01%. After preparation the respective analyte was stirred for 60 minutes on the Variomag® multipoint HP magnetic stirrer. After the stirring, 10 g of the analyte was filled into the measuring cell of the PCD 04 and sheered for 5 minutes prior to titration measurement. The titration was started afterwards and titrated over the neutral point. The used titration solution depended on the charge of the analyte. For a cationic analyte 0.01 N or 0.001 N PES-Na (anionic), for an anionic analyte 0.01 N or 0.001 N polyDADMAC (cationic) was used in dependence of the charge of the analyte. The charge was measured in mV after 5 min. sheering, measuring limit is $\pm 2500$ mV. The charge density was measured in $\mu$eq/g after titration.

• Wet sieve residue (WSR)

The wet sieve residue of the homogenized sludge water was determined by putting a defined amount of sludge water into cleaned and dried sieves with mesh widths of 63 $\mu$m, 45 $\mu$m and 25 $\mu$m. It was done as a fractional sieving from 63 $\mu$m to 25 $\mu$m. The sieves were washed under knocking and by means of flowing tap water till the wash water flowed of in clear condition. After washing of the sieve residues, the respective sieve were put into an ultrasonic bath for 5 min. in order to deagglomerate the remaining fine particles. It had to be taken care that there is no air under the sieve during ultrasonic treatment. The sieves were again washed with flowing tap water. The filtrate had also to be run over the respectively finer sieve. The sieves with the remaining residues were then dried in a circulating drying cabinet until weight consistency was reached. The weight difference to the empty sieve and the percentage with respect to the initial solid content of the defined sludge water were calculated accordingly.

• Brookfield viscosity

Brookfield viscosity was determined on a DV2T Extra™ Viscosimeter from AMETEK GmbH. The polymer was dissolved at the respective concentration in distilled water by stirring with a magnetic stirrer for 1 - 2 hours in a beaker. In case not all polymer was dissolved a Pendraulik stirrer was used for additional 15 minutes. The beaker was then placed into the viscosimeter and Brookfield viscoscity determined at 100 rpm for 2 min.

• Sludge water

All sludge waters used for the examples are described and specified in Table 2.

**Table 2:** Chemical characterization of different sludge waters used for testing

| Sludge water | A | B | C | D |
|---|---|---|---|---|
| Solid content [wt.%] | 5.0 | 6.1 | 5.3-15.3 | 6.1 |
| pH [-] | 7.2 | 7.8 | 3.3-3.9 | 12.3 |
| Conductivity [mS/cm] | 1.1 | 46.0 | 7.1-8.3 | 31.7 |
| Charge [mV] | -413 | -57 | 291 | -815.6 |
| Charge Density [$\mu$eq/g] | 6 | 7 | 4 | 10.3 |

(continued)

| Sludge water | A | B | C | D |
|---|---|---|---|---|
| WSR >63 μm [%] | 15.89 | 0.30 | 0.23 | 11.11 |
| WSR >45 μm [%] | 26.43 | 0.57 | 1.37 | 16.07 |
| WSR >25 μm [%] | 38.72 | 2.23 | 2.55 | 21.51 |

• List of polymers and natural minerals

All components, their characteristics and the respective abbreviations are listed in Table 3.

**Table 3:** Overview, characteristics and abbreviations of the used components. BV = Brookfield viscosity

| Component | Classification | Abbreviation | Characteristics |
|---|---|---|---|
| Cationic polymer | PolyDADMAC | polyDADMAC | Charge density = 7294 μeq/g<br>BV for 1.0 g/L @ 100 rpm = 15 mPas<br>BV for 2.5 g/L @ 100 rpm = 16 mPas<br>BV for 5.0 g/L @ 100 rpm = 18 mPas<br>Molecular weight = < 1 · $10^6$ Da |
| Anionic polymer | Polyacrylate | polyacrylate | Charge density = 14188 μeq/g<br>BV for 1.0 g/L @ 100 rpm = 91 mPas<br>BV for 2.5 g/L @ 100 rpm = 377 mPas<br>BV for 5.0 g/L @ 100 rpm = 759 mPas<br>Molecular weight = 1.0-10.0 · $10^6$ Da |
| | Polyacrylamide | PAM 1 | Charge density = 15462 μeq/g<br>BV for 1.0 g/L @ 100 rpm = 88 mPas<br>BV for 2.5 g/L @ 100 rpm = 342 mPas<br>BV for 5.0 g/L @ 100 rpm = 724 mPas<br>Anionicity 20%<br>Molecular weight = 13.0-17.0 · $10^6$ Da |
| | Polyacrylamide | PAM 2 | Charge density = 13761 μeq/g<br>BV for 1.0 g/L @ 100 rpm = 94 mPas<br>BV for 2.5 g/L @ 100 rpm = 362 mPas<br>BV for 5.0 g/L @ 100 rpm = 803 mPas<br>Anionicity 30%<br>Molecular weight = 13.0-17.0 · $10^6$ Da |
| | Polyacrylamide | PAM 3 | Charge density = 12623 μeq/g<br>BV for 1.0 g/L @ 100 rpm = 99 mPas<br>BV for 2.5 g/L @ 100 rpm = 341 mPas<br>BV for 5.0 g/L @ 100 rpm = 733 mPas<br>Anionicity 30%<br>Molecular weight = 9.0-13.0 · $10^6$ Da |
| | Polyacrylamide | PAM 4 | Charge density = 4365 μeq/g<br>BV for 1.0 g/L @ 100 rpm = 39 mPas<br>BV for 2.5 g/L @ 100 rpm = 118 mPas<br>BV for 5.0 g/L @ 100 rpm = 310 mPas<br>Anionicity 50%<br>Molecular weight = 11.0-15.0 · $10^6$ Da |
| | Polyacrylate | IE | Charge density = 5638 μeq/g<br>BV for 1.0 g/L @ 100 rpm = 132 mPas |

(continued)

| Component | Classification | Abbreviation | Characteristics |
|---|---|---|---|
| | | | BV for 2.5 g/L @ 100 rpm = 314 mPas<br>BV for 5.0 g/L @ 100 rpm = 847 mPas<br>Molecular weight = $0.7\text{-}5.0 \cdot 10^6$ Da |
| Natural mineral | Bentonite | Bentonite | |
| | Diatomaceous Earth | D. E. | |
| | Hydromagnesite | HM | |
| | Kerolite + Saponite | Ker. + Sap. | |
| | Zeolite (Clinoptilolite) | Zeolite | |
| | Sepiolite | Sepiolite | |

**Example 1:** Dewatering of different sludge waters according to the inventive process based on addition of a cationic component (polyDADMAC) and an anionic component consisting of a natural mineral and anionic polymer (PAM 3) varying the mineral.

The inventive process leads to exceptionally advantageous results regarding the density of the composite material (Table 4 & 5, Figures 1 & 2) which facilitates separation and decreases process time. Turbidity and sludge volume can be significantly reduced regarding sludge water containing a high amount of very fine sediments (at least 60 wt.-% of solids with an average grain size of <25 μm) compared to a state of the art process adding a polyDADMAC modified $CaCO_3$ first and providing a anionic polymer in the second step. Sludge water A and B are examples with different amount of fine fraction (Table 2).

**Table 4:** Ranked performance indicators for dewatering of sludge water B with inventive process in comparison to state of the art process (Reference). For the inventive process polyDADMAC was used as cationic component. As anionic component, natural minerals were tested in combination with different amounts of anionic polymer (PAM 3) indicated in left column.

| PAM 3 | | Performance | 1 | 2 | 3 | 4 | 5 | 6 | Zero |
|---|---|---|---|---|---|---|---|---|---|
| | 10 wt.-% | Turbidity / FNU | 21 | 23 | 29 | 34 | 35 | 58 | 365 |
| | | | Sap. + Ker. | Bentonite | HM | Zeolite | D. E. | Reference | - |
| | | Sludge V / mL | 5.0 | 5.0 | 6.0 | 6.5 | 7.5 | 7.5 | 7.5 |
| | | | Sap. + Ker. | Bentonite | D. E. | HM | Zeolite | Reference | - |
| | 2 wt.-% | Turbidity / FNU | 35 | 35 | 36 | 36 | 40 | 62 | 365 |
| | | | HM | Sap. + Ker. | Zeolite | Bentonite | D. E. | Reference | - |
| | | Sludge V / mL | 7.0 | 7.0 | 7.0 | 7.5 | 7.5 | 8.0 | 7.5 |
| | | | HM | Bentonite | D. E. | Zeolite | Sap. + Ker. | Reference | - |

**Table 5:** Ranked performance indicators for dewatering of sludge water A with inventive process in comparison to state of the art process (Reference). For the inventive process polyDADMAC was used as cationic component. As anionic component, natural minerals were tested in combination with different amounts of anionic polymer (PAM 3) indicated in left column.

| PAM 3 | Performance | 1 | 2 | 3 | 4 | 5 | 6 | Zero |
|---|---|---|---|---|---|---|---|---|
| 10 wt.-% | Turbidity / FNU | 90 | 91 | 107 | 109 | 113 | 121 | >1000 |
| | | HM | D. E. | Sap. + Ker. | Bentonite | Reference | Zeolite | - |
| | Sludge V / mL | 9.5 | 10.5 | 12.0 | 12.5 | 12.5 | 20.5 | 22.0 |
| | | HM | Sap. + Ker. | Zeolite | Bentonite | D. E. | Reference | - |
| 6 wt.-% | Turbidity / FNU | 44 | 54 | 56 | 59 | 60 | 76 | >1000 |
| | | HM | D. E. | Sap. + Ker. | Bentonite | Reference | Zeolite | - |
| | Sludge V / mL | 10.0 | 12.5 | 12.5 | 14.0 | 15.0 | 19.5 | 22.0 |
| | | D. E. | HM | Sap. + Ker. | Zeolite | Bentonite | Reference | - |

**Example 2:** Dewatering of different sludge waters with the inventive process based on addition of a cationic component (polyDADMAC) and an anionic component consisting of a natural mineral / anionic polymer combination varying the anionic polymer (IE, PAM 1-4)

Table 6 lists the different charges and charge densities for different amounts of PAM 3 on different natural anionic minerals. Based on results of example 1 charge densities $\geq$ 100 $\mu$eq/g and charges $\leq$ -900 mV yield good dewatering performance.

**Table 6:** Charge and charge density of anionic components (natural mineral / PAM 3) in comparison to Reference. Note that measuring limit for charge is $\pm$2500 mV

| Mineral / PAM 3 | Charge / [mV] | Charge Density / [$\mu$eq/g] |
|---|---|---|
| Reference | +777 | 82 |
| | | |
| Bentonite / - | -468 | 2 |
| Bentonite / 2 wt.% | -1317 | 157 |
| Bentonite / 6 wt.% | $\leq$ -2500 | 274 |
| Bentonite / 10 wt.% | $\leq$ -2500 | 754 |
| | | |
| Saponite + Kerolite / - | -304 | 3 |
| Saponite + Kerolite / 2 wt.% | -1200 | 142 |
| Saponite + Kerolite / 6 wt.% | -1878 | 250 |
| Saponite + Kerolite / 10 wt.% | $\leq$ -2500 | 479 |
| | | |

(continued)

| Mineral / PAM 3 | Charge / [mV] | Charge Density / [μeq/g] |
|---|---|---|
| Diatomaceous Earth / - | -384 | 1 |
| Diatomaceous Earth / 2 wt.% | -1760 | 138 |
| Diatomaceous Earth / 6 wt.% | ≤ -2500 | 361 |
| Diatomaceous Earth / 10 wt.% | ≤ -2500 | 617 |
|  |  |  |
| Hydromagnesite / - | -82 | 4 |
| Hydromagnesite / 2 wt.% | -972 | 134 |
| Hydromagnesite / 6 wt.% | -1553 | 308 |
| Hydromagnesite / 10 wt.% | -1692 | 480 |
|  |  |  |
| Zeolite / - | -483 | 3 |
| Zeolite / 2 wt.% | -1394 | 145 |
| Zeolite / 6 wt.% | ≤ -2500 | 370 |
| Zeolite / 10 wt.% | ≤ -2500 | 525 |

The inventive process leads to advantageous results for a wide range of charge densities of the anionic component. Table 7 shows the dewatering performance of an anionic acrylamide-free polymer IE in combination with different natural minerals. The respective charges and charge densities for each combination can be found in Table 8.

**Table 7:** Ranked performance indicators for dewatering of sludge water A with the inventive process in comparison to state of the art process (Reference). Natural minerals were tested in combination with 10 wt.-% anionic acryl-amide free polymer IE.

| IE | Performance | 1 | 2 | 3 | 4 | 5 | Zero |
|---|---|---|---|---|---|---|---|
| 10 wt.-% | Turbidity / FNU | 13.2 | 15.3 | 17.4 | 17.8 | 17.9 | >1000 |
|  |  | Sepiolite | D. E. | HM | Sap. + Ker. | Reference | - |
|  | Sludge V / mL | 18.0 | 18.5 | 19.0 | 19.0 | 20.0 | 22.0 |
|  |  | D. E. | Sepiolite | HM | Sap. + Ker. | Reference | - |

**Table 8:** Charge and charge density of natural mineral / IE combinations. Note that measuring limit for charge is ±2500 mV.

| Mineral / IE | Charge / [mV] | Charge Density / [μeq/g] |
|---|---|---|
| Reference | 777 | 82 |
| Sepiolite / 10 wt.% | < -2500 | 684 |
| Saponite + Kerolite / 10 wt.% | -1954 | 742 |

(continued)

| Mineral / IE | Charge / [mV] | Charge Density / [μeq/g] |
|---|---|---|
| Diatomaceous Earth / 10 wt.% | ≤ -2500 | 911 |
| Hydromagnesite / 10 wt.% | -920 | 653 |

For the invention it is crucial that the charge of the natural mineral / anionic polymer is reduced and the charge density is increased. Table 9 displays a comparison between polyacrylamides with different anionicity. The higher the anionicity, the better the turbidity and hence the removal of suspended solid matter.

**Table 9:** Influence of the charge of the anionic polymer on the anionic component by dewatering of sludge water A (PAM 4 = 50% anionicity, PAM 2 = 30% anionicity, PAM 1 = 20% anionicity)

| Anionic polymer | Performance | 1 | 2 | 3 |
|---|---|---|---|---|
| 2 wt.-% | Turbidity / FNU | 113 | 119 | 144 |
| | | D. E. / PAM 4 | D. E. / PAM 2 | D. E. / PAM 1 |
| | Sludge V / mL | 13.0 | 15.0 | 17.0 |
| | | D. E. / PAM 2 | D. E. / PAM 1 | D. E. / PAM 4 |
| 2 wt.-% | Turbidity / FNU | 78 | 82 | 139 |
| | | HM / PAM 4 | HM / PAM 2 | HM / PAM 1 |
| | Sludge V / mL | 14.5 | 15.0 | 17.5 |
| | | HM / PAM 1 | HM / PAM 2 | HM / PAM 4 |

For the invention medium molecular weight anionic polymers are preferred. Table 10 lists improved turbidity for comparable lower molecular weight of polyacrylamides.

**Table 10:** Influence of the molecular weight of anionic polymer by dewatering of sludge water A

| Anionic polymer | Performance | 1 | 2 | 3 |
|---|---|---|---|---|
| 2 wt.-% | Turbidity / FNU | 108 | 113 | 284 |
| | | D. E. / PAM 3 | D. E. / PAM 2 | none |
| | Sludge V / mL | 13.0 | 14.0 | 19.5 |
| | | D. E. / PAM 2 | D. E. / PAM 3 | none |
| 2 wt.-% | Turbidity / FNU | 82 | 101 | 266 |
| | | HM / PAM 3 | HM / PAM 2 | none |
| | Sludge V / mL | 15.0 | 15.0 | 19.5 |
| | | HM / PAM 3 | HM / PAM 2 | none |

**Example 3:** Applicability of invention to a broad range of sludge waters

The invention is applicable to a broad range of sludge waters covering at least a pH range of 3.0-12.3 and a solid content of at least 5.3%-15.3% as can be seen by dewatering results listed in Table 11 & 12. The invention is also independent on the overall charge of the sludge water as can be seen in Table 2.

**Table 11:** pH independency of the invention for dewatering of different sludge waters comparing one representative natural anionic component (D. E. / 10 wt.-% PAM 3) with state of the art process (Reference) at a similar solid content of 5.0-6.1%.

| | Sludge water | C | | A | | B | | D | |
|---|---|---|---|---|---|---|---|---|---|
| PAM 3 | pH | 3.0 | | 7.2 | | 7.8 | | 12.3 | |
| 10 wt.-% | Turbidity / FNU | 41 | 83 | 91 | 113 | 35 | 58 | 107 | 144 |
| | | D. E. | Reference | D. E. | Reference | D. E. | Reference | D. E. | Reference |
| | Sludge V / mL | 12.0 | 14.0 | 12.5 | 20.5 | 6.0 | 7.5 | 15.5 | 18.0 |
| | | D. E. | Reference | D. E. | Reference | D. E. | Reference | D. E. | Reference |

**Table 12:** Solid content independency of the invention for dewatering of sludge water C comparing one representative anionic component (D. E. / 10 wt.% PAM 3) with state of the art process (Reference) at a similar pH.

| | Sludge water | C | | | | | |
|---|---|---|---|---|---|---|---|
| PAM 3 | Solid content % | 5.3 | | 10.1 | | 15.3 | |
| 2 wt.-% | Turbidity / FNU | 53 | 79 | 49 | 79 | 52 | 82 |
| | | D. E. | Reference | D. E. | Reference | D. E. | Reference |
| | Sludge V / mL | 12.0 | 13.0 | 12.5 | 14.0 | 12.0 | 13.0 |
| | | D. E. | Reference | D. E. | Reference | D. E. | Reference |

**Claims**

1. A process for dewatering of aqueous sludge water, comprising the steps:

   a) Providing a sludge water;
   b) Adding at least one cationic component selected from cationic synthetic or natural polymers, oligomers and mixtures thereof;
   c) Contacting the sludge water with at least one anionic component selected from natural anionic minerals and mixtures thereof;

d) Formation of a composite material consisting of the sludge, the cationic component and the anionic component;

e) Separating the water from the composite material.

2. Process according to claim 1 wherein the natural anionic mineral comprises an anionic polymer.

3. Process according to any of the foregoing claims, wherein the sludge water comprises at least 60 wt.-% water ($H_2O$) and at least 1 wt.-% of solids selected from silt particles of a granular material of a size between 0.002 mm and 0.063 mm and/or clay particles of a grain size of less than 0.002 mm.

4. Process according to any of the foregoing claims, wherein the sludge water contains at least 60 wt.-% solids of a grain size of less than 25 $\mu$m.

5. Process according to any of the foregoing claims, wherein the sludge water has a solid content of 1.0 to 20.0 wt.-%.

6. Process according to any of the foregoing claims, wherein the sludge water has a pH value of 2.0 to 13.5.

7. Process according to any of the foregoing claims, wherein the sludge water has a solid content of 5 to 15 wt.-% and a pH value of 3.0 to 12.5.

8. Process according to any of the foregoing claims, wherein at least one cationic component is selected from the group consisting of poly(diallyldimethylammonium chloride) (polyDADMAC), polyethylenimine (PEI), polyamine, polyvinylamine (PVA), poly(amidoamine) (PAMAM), cationic polyacrylamide (CPAM), poly(meth)acrylamidopropyl trimethylammonium chloride, cationic poly(meth)acrylates and copolymers thereof, cationic poly(meth)acrylamides, cationic modified guar gum, cationic modified cellulose, cationic starch and/or cationic proteins salts and copolymers thereof, and chitosan.

9. Process according to any of the foregoing claims, wherein the mineral is selected from the group of tectosilicates as such as zeolite, clinoptilolite, mordenite, chabazite, phillipsite, scolecite, stilbite, analcime, laumontite, erionite, ferrierite, quartz, diatomaceous earth, perlite, feldspars; and/or phyllosilicates such as kaolin, kaolinite, nacrite, serpentine, chysotile, antigorite, lizardite, halloysite, dickite, chrysotile, pyrophyllite, talc, kerolite, smectite, montmorillonite, beidellite, nontronite, hectorite, saponite, sauconite, vermiculite, muscovite, phlogopite, illite, sepiolite, palygorskite, attapulgite; bentonite and/or other minerals such as hydromagnesite, magnesium carbonate, gypsum, huntite, alumina, boehmite, gibbsite; and mixtures thereof.

10. Process according to claim 9 wherein the mineral is subjected to an ionic exchange process.

11. Process according to any of claims 2 to 10, wherein the anionic polymer is selected from anionic polyacrylamide (APAM), polyacrylate, polyvinyl alcohol; phosphates such as trisodium phosphate, sodium pyrophosphate, trisodium polyphosphate; polyphosphonate; salts of organic acids such as citrate, tartrate, succinate, adipate; carboxymethyl cellulose (CMC) and salts thereof; anionic carboxymethylstarch; lignosulfate; alkyl and/or aryl sulfonate; lauryl sulfate, Alginate, chitosan, guar gum; and mixtures thereof.

12. Process according to of claims 2 to 11, wherein the ratio of natural anionic mineral to anionic polymer is at least 1: 0.02.

13. Process according to any of claims 2 to 12, wherein the molecular weight of the anionic polymer is from 0.7 - 17.5 · $10^6$ Da.

14. Process according to any of the foregoing claims, wherein the anionic component has a negative charge of from -3000 to -100 mV and a charge density of from 100 to 1000 $\mu$eq/g.

15. Process according to any of the foregoing claims, wherein the cationic component is added in an amount from 0.001 kg to 0.5 kg per ton sludge water.

16. Process according to any of the foregoing claims, wherein the sludge water is contacted with from 1 to 5 kg anionic component per ton sludge water.

**Fig. 1**

**Fig. 2**

Europäisches
Patentamt

European
Patent Office

Office européen
des brevets

**EUROPEAN SEARCH REPORT**

Application Number

EP 18 20 3865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 291 275 B1 (DAVIS ROBERT A [US] ET AL) 6 November 2007 (2007-11-06)<br>* column 6, line 18 - line 31 *<br>* Example Six;<br>column 10 * | 1-16 | INV.<br>C02F1/52<br>C02F1/56<br>C02F11/148 |
| X | US 2012/029120 A1 (SOANE DAVID S [US] ET AL) 2 February 2012 (2012-02-02)<br>* Table 1 - 4;<br>paragraph [0131] - paragraph [0147]; claim 1 *<br>* paragraph [0118] - paragraph [0127];<br>claims 7,8 * | 1-16 | |
| A | US 2007/172913 A1 (HUGHES JONATHAN [GB] ET AL) 26 July 2007 (2007-07-26)<br>* paragraph [0036] * | 1-16 | |

TECHNICAL FIELDS
SEARCHED (IPC)

C02F

The present search report has been drawn up for all claims

| Place of search | Date of completion of the search | Examiner |
|---|---|---|
| The Hague | 25 February 2019 | Du, Mingliu |

EPO FORM 1503 03.82 (P04C01)

## ANNEX TO THE EUROPEAN SEARCH REPORT
## ON EUROPEAN PATENT APPLICATION NO.

EP 18 20 3865

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2019

| Patent document cited in search report | | | Publication date | Patent family member(s) | | | Publication date |
|---|---|---|---|---|---|---|---|
| US 7291275 | | B1 | 06-11-2007 | NONE | | | |
| US 2012029120 | | A1 | 02-02-2012 | CA | 2747615 | A1 | 27-01-2012 |
| | | | | US | 2012029120 | A1 | 02-02-2012 |
| | | | | US | 2017073254 | A1 | 16-03-2017 |
| US 2007172913 | | A1 | 26-07-2007 | AU | 2005211456 | A1 | 18-08-2005 |
| | | | | BR | PI0507470 | A | 10-07-2007 |
| | | | | CA | 2553585 | A1 | 18-08-2005 |
| | | | | CN | 1914120 | A | 14-02-2007 |
| | | | | EP | 1711438 | A2 | 18-10-2006 |
| | | | | US | 2007172913 | A1 | 26-07-2007 |
| | | | | WO | 2005075687 | A2 | 18-08-2005 |
| | | | | ZA | 200605733 | B | 27-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2589430 A
- WO 2014180631 A
- WO 2016146404 A
- WO 2017129419 A
- EP 17198872 A